# EUROPÄISCHE PATENTSCHRIFT

(11) **EP 2 820 058 B1**
(45) Veröffentlichungstag und Bekanntmachung des Hinweises auf die Patenterteilung: **21.09.2016**
(21) Anmeldenummer: 13706026.5
(22) Anmeldetag: 27.02.2013
(51) Int. Cl.: C08G 18/34

(54) **VERFAHREN ZUR HERSTELLUNG VON POLYMERHARTSCHÄUMEN**
METHOD FOR PRODUCING RIGID POLYMERIC FOAMS
PROCÉDÉ DE PRODUCTION DE MOUSSES DURES POLYMÈRES

(30) Priorität: 28.02.2012 EP 12157236; 27.03.2012 EP 12161392
(43) Veröffentlichungstag der Anmeldung: 07.01.2015
(73) Patentinhaber: BASF SE, 67056 Ludwigshafen am Rhein (DE)
(72) Erfinder: PRISSOK, Frank, 49448 Lemförde (DE); HARMS, Michael, 49356 Diepholz (DE)
(86) Internationale Anmeldenummer: PCT/EP2013/053861
(87) Internationale Veröffentlichungsnummer: WO 2013/127814

(56) Entgegenhaltungen:
- DE-A1- 19 804 911
- US-A- 3 476 933
- US-A- 3 637 542

## Beschreibung

Die vorliegende Erfindung betrifft ein Verfahren zur Herstellung eines Polymerhartschaumes, den so erhältlichen Polymerhartschaum und dessen Verwendung.

Polymerschäume, wie Polyurethan- und Polyurethan-Polyharnstoff-Schäume auf der Basis von Di- oder Polyisocyanaten sind seit langem bekannt. Polyurethan-Hartphasen haben eine im Vergleich zu einer Polyamid-Hartphase deutlich geringere Schmelztemperatur, was einen entscheidenden Einfluss auf den Einsatz der Materialien bei hohen Temperaturen hat.

Weiterhin sind die Reaktion von Carbonsäuren mit Isocyanaten zu gemischten Carbaminsäureanhydriden und die teilweise weitere Reaktion zu Amiden bekannt. Dabei wird die Reaktion und deren Mechanismus beispielsweise von R. W. Hoffman in Synthesis 2001, No. 2, 243 - 246 und I. Scott in Tetrahedron Letters, Vol. 27, No. 11, pp 1251 - 1254, 1986 beschrieben.

Oligomere Verbindungen, die eine Reaktion zwischen einem Diisocyanat und einer Dicarbonsäure verwenden, werden von K. Onder in Rubber Chemistry and Technology, Vol. 59, Seiten 615 - 622 und von T. O. Ahn in Polymer Vol. 39, No. 2, pp. 459 - 456, 1998 beschrieben.

EP 0 527 613 A2 beschreibt die Herstellung von Schäumen, die Amidgruppen enthalten. Diese werden mittels organischer Polyisocyanate und polyfunktionaler organischer Säuren hergestellt. Dabei werden die Schäume mittels einer Additionsreaktionsreaktion hergestellt, indem ein organisches Polyisocyanat mit dem Reaktionsprodukt eines Polyoxyalkylens und einer organischen Polycarbonsäurekomponente reagiert. Dabei reagieren die zwei Isocyanatgruppen mit einer Kohlenstoffdioxid erzeugenden Verbindung. Diese Verbindung ist das Reaktionsprodukt von einem Polyoxyalkylenpolyamin oder einer Polyolkomponente mit einer organischen Polycarboxylsäurekomponente. Die Polyoxyalkylenpolyamin- oder Polyolkomponente hat ein mittleres Molekulargewicht von 200 bis 5000 g/mol. Die Starttemperatur für die Reaktion beträgt mindestens 150 °C, wobei die Reaktionszeit in einem Bereich von einer halben Stunde bis zwölf Stunden liegt.

DE 42 02 758 A1 beschreibt ein Schaumstoff mit Urethan- und Amidgruppen, der unter Verwendung von Polyhydroxycarbonsäuren mit einer Kettenlänge von 8 bis 200 Kohlenstoffatomen herstellbar ist. Dabei werden die Polyhydroxycarbonsäuren zweckmäßigerweise durch Ringöffnung epoxidierter ungesättigter Fettsäuren mit Hydroxylgruppen-haltigen Verbindungen, wie Wasser, Alkohol oder Hydroxycarbonsäuren hergestellt. Die Rohdichten der Schaumstoffe liegen in einem Bereich von 33 bis 190 kg/m³.

JP 2006-137870 A beschreibt ein Verfahren, um einen Polyamidschaum herzustellen und die Anwendung dieses Polyamidschaums. Dabei werden eine Polyisocyanatkomponente und eine Polyesterpolycarbonsäurekomponente miteinander zur Reaktion gebracht, wobei ein Phosphinoxid als Katalysator fungiert. Dabei wird die Reaktionsmischung auf mindestens 170 °C erwärmt.

DE 198 04 911 A1 beschreibt ein Verfahren zur Herstellung von Fluorchlorkohlenwasserstofffreien weichelastischen, halbharten oder harten Polyurethanformkörpern mit einem zelügen Kern und einer verdichteten Randzone. Die Umsetzung erfolgt von a) Polyisocyanaten mit b) mindestens einer Verbindung mit mindestens zwei reaktiven Wasserstoffatomen, c) Treibmitteln, d) Katalysatoren sowie gegebenenfalls e) Hilfsmitteln und/oder Zusatzstoffen, wobei die Treibmittel c) mindestens einen Carbodiimid bildenden Katalysator und mindestens eine Carbonsäure und/oder deren Anhydrid enthalten.

US 3,637,542 A beschreibt feuerhemmende Polyurethanschäume mit einem reduzierten Rauchpegel. Dazu wird Adipinsäure in einen phosphorhaltigen Polyurethanschaum gegeben. Somit beschreibt US 3,637,542 A weder die Menge einer Lewisbasekomponente D in einem Bereich von 0,05 bis 1 Gew.-% noch dass es sich bei der Lewisbasekomponente D um N-Methylimidazol handelt.

US 3,476,933 A beschreibt einen großzelligen Polyurethanschaum. US 3,476,933 A beschreibt einen Polyetherurethanschaum, der mittels eines Polyetherpolyols mit einem Molekulargewicht von 800 bis 3000 und einem Polyol mit einem Molekulargewicht kleiner als 195 mit einer Mischung von Polymethylenpolyphenylisocyanat und Toluendüsocyanat mit mindestens einem Aminkatalysator und einem Metallsalz-Katalysator zusammen mit einer organischen Fettsäure, Silikontensid und Treibmittel hergestellt wird. US 3,476,933 A beschreibt als aminhaltige Katalysatoren verschiedene Ethanolamine, Piperazine oder cyclische Amine.

Nachteilig an den bekannten Polyurethan/Polyamid-Schäumen ist, dass die Ausgangsstoffe entweder erst bei höheren Temperaturen zur Reaktion gebracht werden, nicht komplett miteinander reagieren oder die Schäume eine Schaumdichte aufweisen, die nicht Standardpolyurethanrezepturen entspricht.

Aufgabe der vorliegenden Erfindung ist es, Polymerhartschäume und Verfahren zu ihrer Herstellung bereitzustellen, wobei die Polymerhartschäume auch bei hohen Temperaturen in Gegenwart von Feuchtigkeit und/oder bei hohen Drücken formstabil sind, so dass sie auch in der Nähe von Motor, Getriebe oder Abgasführung verwendet werden können. Des Weiteren sollen die Polymerhartschäume vorteilhafte Eigenschaften bezüglich lang anhaltender Elastizität, Abriebfestigkeit, Zugfestigkeit, Weiterreißfestigkeit und Druckverformungskräften aufweisen. Aufgabe ist es weiterhin, einen Polymerhartschaum bereitzustellen, der Polyamidgruppen aufweist, die durch eine Reaktion von Diisocyanatkomponenten mit Dicarbonsäurenkomponenten in kurzen Zeiten erhältlich sind, wobei vorzugsweise keine zusätzlichen Treibmittel erforderlich sind.

Die Aufgaben werden erfindungsgemäß gelöst durch ein Verfahren zur Herstellung eines Polymerhartschaums, umfassend die Umsetzung der Komponenten A bis C in Gegenwart von Komponente D oder eines Isocyanatgruppen-haltigen Prepolymers der Komponenten A und B mit Komponente C in Gegenwart von Komponente D, deren Gesamtmenge 100 Gew.-% ergibt,
(A) 35 bis 65 Gew.-%, vorzugsweise 40 bis 62 Gew.-%, insbesondere 42 bis 55 Gew.-%, mindestens einer Polyisocyanatkomponente A,
(B) 5 bis 50 Gew.-%, vorzugsweise 10 bis 40 Gew.-%, insbesondere 15 bis 30 Gew.-%, von mindestens einer Polyolkomponente B,
(C) 5 bis 45 Gew.-%, von mindestens einer Polycarbonsäurekomponente C und
(D) 0,05 bis 1 Gew.-%, mindestens einer Lewisbasekomponente D, wobei die Lewisbasekomponente N-Methylimidazol ist und
wobei die Umsetzung unter Freisetzung von Kohlendioxid erfolgt. Neben den Komponenten A bis D können weitere Inhaltsstoffe im Umsetzungsgemisch vorliegen.

Das erfindungsgemäße Verfahren zeichnet sich dadurch aus, dass sich durch die Reaktion einer Carbonsäuregruppe mit einer Isocyanatgruppe ein gemischtes Carbaminsäureanhydrid bildet, welches durch eine weitere Reaktion ein Amid bildet. Durch die CO₂-Abspaltung aus den Carbaminsäureanhydriden mittels Lewisbasen als Katalysatoren lassen sich die Polymerschäume ähnlich schnell erhalten, wie beispielsweise Polymerschäume, die auf Polyurethanbasis aufgebaut sind. Da bei dieser Reaktion das Treibgas aus den Komponenten selbst frei wird, kann die Umsetzung wasser- und treibmittelfrei erfolgen.

Unter einem Polymerhartschaum kann im Sinne der vorliegenden Erfindung verstanden werden, dass bei der Herstellung des Polymerhartschaums eine Volumenveränderung des Reaktionsgemisches bis zum endgültigen Reaktionsende auftritt, auch nach Beendigung der Hauptreaktion, da die Schaummatrix noch viskos ist und das Gas sich innerhalb des Schaums weiter ausdehnen kann. Dabei kann vorteilhafterweise der Polymerschaum Zellen bzw. Hohlräume innerhalb des Polymerschaums und auch auf der Oberfläche des Polymerschaums aufweisen.

Die erfindungsgemäßen Polymerhartschäume weisen eine Druckspannung bei 10 % Stauchung von größer gleich 80 kPa, bevorzugt größer gleich 150 kPa, besonders bevorzugt größer gleich 180 kPa auf. Weiterhin verfügt der Polymerhartschaum nach DIN ISO 4590 über eine Geschlossenzelligkeit von mindestens 70 %, bevorzugt größer 85 %. Weitere Details zu erfindungsgemäßen Polymerhartschäumen finden sich im "Kunststoffhandbuch, Band 7, Polyurethane", Carl Hanser Verlag, 3. Auflage 1993, Kapitel 6. Für Polyurethan-Schaumstoffe kann auch auf DIN 7726 verwiesen werden.

Durch den erfindungsgemäßen Einsatz der Lewisbase-Komponente als Beschleuniger, bzw. Katalysator in der Umsetzung, ist es möglich, die Polyaddition und die Polykondensation gleichmäßig und mit hoher Geschwindigkeit auszuführen, so dass sowohl der Molekulargewichtsaufbau und das Gelieren des entstehenden Polymers als auch das Aufschäumen, insbesondere durch das freigesetzte Kohlendioxid, gleichzeitig derart erfolgen, dass sich ein stabiler gleichmäßiger Schaum ausbildet, der sich sodann verfestigt. Es wurde erfindungsgemäß gefunden, dass die Verwendung einer Lewisbase-Komponente für beide Teilreaktionen ausreicht und die Reaktionen so aufeinander abgestimmt sind, dass gleichzeitig mit der Gasentstehung und Schaumbildung ein Viskositätsanstieg verbunden ist, der zu einer gleichmäßigen Ausbildung des Schaums führt. Wenn die Viskosität bereits zu stark angestiegen ist, kann anderenfalls die Schaumbildung beeinträchtigt werden. Wenn während der Schaumbildung der Viskositätsanstieg noch zu gering ist, bzw. keinerlei Gelierprozess eingesetzt hat, kann das entstandene Gas durch das flüssige Polymer aufsteigen und aus diesem entweichen, bzw. sich an der Oberfläche ansammeln, so dass keine gleichmäßige Schaumstruktur entsteht. Im erfindungsgemäßen Verfahren werden diese Probleme überwunden, und es resultiert ein Polymerhartschaum mit gleichmäßiger Zellenverteilung über den gesamten Querschnitt des Polymerhartschaums.

Ferner wurde erfindungsgemäß gefunden, dass bei Einsatz der erfindungsgemäßen Mengen der Komponenten, die Kohlendioxidbildung ausreichend ist zur Herstellung eines geeigneten Polymerhartschaums, so dass keine externen Treibmittel zugesetzt werden müssen. Sofern ein Schaum mit geringerer Dichte gewünscht ist, können jedoch auch externe Treibmittel zusätzlich mitverwendet werden. Bevorzugt wird auf den Zusatz von externen Treibmitteln verzichtet. Ebenso wird erfindungsgemäß ein Zusatz von Wasser zum Reaktionsgemisch oder die Gegenwart von Wasser im Reaktionsgemisch vermieden. Bevorzugt wird die Umsetzung wasserfrei, d. h. in Abwesenheit von Wasser durchgeführt. Wasser ist bevorzugt im Umsetzungsgemisch nicht enthalten.

Die einzelnen erfindungsgemäß eingesetzten Komponenten werden nachstehend näher erläutert.

Im Sinne der vorliegenden Erfindung können unter mindestens einer Polyisocyanatkomponente, hier auch als Komponente A bezeichnet, mehrfunktionelle aromatische und/oder aliphatische Isocyanate, z. B. Diisocyanate verstanden werden.

Vorteilhafterweise kann die Polyisocyanatkomponente eine Funktionalität bezüglich Isocyanatgruppen in einem Bereich von 1,8 bis 5,0 besonders bevorzugt eine Funktionalität von 1,9 bis 3,5 und ganz besonders bevorzugt eine Funktionalität von 2,0 bis 3,0 aufweisen.

Vorzugsweise enthalten die geeigneten mehrfunktionellen Isocyanate im Mittel 2 bis höchstens 4 NCO-Gruppen. Geeignete Isocyanate sind beispielsweise 1,5-Naphthylendiisocyanat, Xylylendiisocyanat (XDI), Tetramethylxylylendiisocyanat (TMXDI), Diphenyldimethylmethandiisocyanatderivate, Di- und Tetraalkyldiphenylmethandiisocyanat, 4,4 -Dibenzyldiisocyanat, 1,3-Phenylendiisocyanat, 1,4-Phenylendiisocyanat, die Isomeren des Toluylendiisocyanats (TDI), gegebenenfalls in Mischung, 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethyl-cyclohexan (IPDI), chlorierte und bromierte Diisocyanate, phosphorhaltige Diisocyanate, 4,4-Diisocyanatophenylperfluorethan, Tetramethoxybutan 1,4-diisocyanat, Butan-1,4-diisocyanat, Hexan-1,6-diisocyanat (HDI), Dicyclohexylmethandiisocyanat, Cyclohexan-1,4-diisocyanat, Ethylendiisocyanat, Phthalsäure-bis-isocyanatoethylester, ferner Polyisocyanate mit reaktionsfähigen Halogenatomen, wie 1-Chlormethylphenyl-2,4-diisocyanat, 1-Brommethylphenyl-2,6-diisocyanat, 3,3-Bis-chlormethylether-4,4-diphenyldiisocyanat.

Weitere wichtige Diisocyanate sind Trimethylhexamethylendiisocyanat, 1,12-Diisocyanatododecan und Dimerfettsäurediisocyanat.

Besonders geeignet sind 4,4 -Diphenylmethandiisocyanat (MDI), hydriertes MDI (H₁₂MDI), polymeres Methylendiphenyldiisocyanat, wobei das polymere Methylendiphenyldiisocyanat vorteilhafterweise eine Funktionalität von mindestens 2,2 aufweist.

In dem erfindungsgemäßen Verfahren erfolgt die Umsetzung von 35 - 65 Gew.-% mindestens einer Polyisocyanatkomponente, vorzugsweise von 40 - 60 Gew.-% mindestens einer Polyisocyanatkomponente und besonders bevorzugt von 42 - 55 Gew.-% mindestens einer Polyisocyanatkomponente. Insbesondere kann die Komponente A zusammen, nacheinander oder jeweils zuerst mit den jeweiligen Komponenten B, C und D in Kontakt gebracht werden. Beispielsweise können Komponenten A und B zur Herstellung eines Isocyanatgruppen-haltigen Prepolymers umgesetzt werden. Das Prepolymer weist dabei wiederum eine Isocyanat-Funktionalität von vorzugsweise 2,5 bis 3 auf.

Im Rahmen einer weiteren Ausführungsform des erfindungsgemäßen Verfahrens weist die Komponente A ein mittleres Molekulargewicht in einem Bereich von 100 g/mol bis 750 g/mol, vorteilhafterweise ein mittleres Molekulargewicht in einem Bereich von 130 g/mol bis 500 g/mol und insbesondere ein mittleres Molekulargewicht in einem Bereich von 250 g/mol bis 450 g/mol auf. Idealerweise kann mittels dieser Polyisocyanatkomponente eine hohe Dichte an Amidbindungen pro Polymereinheit, die bei dem erfindungsgemäßen Verfahren hergestellt wird, erzielt werden. Dadurch kann eine Hartphase mit vorteilhaften Eigenschaften generiert werden. Amide weisen höhere Schmelzpunkte und höhere Zersetzungstemperaturen als Urethane auf. Polymerhartschäume mit einem höheren Anteil an Amidbindungen weisen damit ebenfalls einen höheren Schmelzpunkt und eine höhere Zersetzungstemperatur auf und sind damit für Hochtemperaturanwendungen besonders geeignet, beispielsweise als Dämmmaterialien im Motorraum eines Kraftfahrzeugs.

Im Sinne der vorliegenden Erfindung können unter mindestens einer Polyolkomponente B, hier auch als Komponente B bezeichnet, organische Verbindungen verstanden werden, die mindestens zwei freie Hydroxylgruppen aufweisen. Die Verbindungen sind dabei vorzugsweise frei von anderen funktionellen Gruppen oder reaktionsfähigen Gruppen, wie Säuregruppen. Vorzugsweise handelt es sich bei der Polyolkomponente B um ein Polyetherpolyol oder Polyesterpolyol. Beispiele hierfür sind ein Polyoxyalkylen, ein Polyoxyalkenyl, ein Polyesterdiol, ein Polyesterol, ein Polyetherglycol, insbesondere ein Polypropylenglycol, ein Polyethylenglycol, ein Polypropylenglycol, ein Polypropylenethylenglycol verstanden werden oder Mischungen davon. Unter einer Mischung kann beispielsweise ein Copolymerisat verstanden werden, aber auch eine Mischung der Polymere. Die Polyglycolkomponente weist bevorzugt ein mittleres Molekulargewicht von 200 g/mol bis 6000 g/mol, insbesondere ein mittleres Molekulargewicht von 250 g/mol bis 3000 g/mol und besonders bevorzugt ein mittleres Molekulargewicht von 300 g/mol bis 800 g/mol auf.

In einer weiteren Ausführungsform des erfindungsgemäßen Verfahrens weist die Komponente B eine OH-Zahl von 10 mg KOH/g bis 1000 mg KOH/g auf. Insbesondere kann die Komponente B eine OH-Zahl von 30 mg KOH/g bis 500 mg KOH/ g aufweisen.

Komponenten A und (B + C) können in einem molaren Verhältnis von Isocyanatgruppen der Komponente A zu mit Isocyanatgruppen reaktionsfähigen Gruppen, wie Hydroxyl- oder Carbonsäuregruppen der Komponenten B und C im Bereich von vorzugsweise 10 : 1 bis 1 : 2, besonders bevorzugt 5 : 1 bis 1 : 1,5, insbesondere 3 : 1 bis 1 : 1 eingesetzt werden.

Unter mindestens einer Polycarbonsäureverbindung, vorzugsweise Dicarbonsäurekomponente, hier auch als Komponente C bezeichnet, wird im Sinne der Erfindung eine organische Verbindung mit mindestens, bzw. genau zwei Carboxyl-gruppen, -COOH oder ein Säureanhydrid davon, verstanden. Die Carboxylgruppen können mit Alkyl- oder Cycloalkylresten oder mit aromatischen Resten verbunden sein. Es kann sich um aliphatische, aromatische, araliphatische oder alkylaromatische Polycarbonsäuren handeln, die auch Heteroatome, insbesondere Stickstoffatome und andere funktionelle Gruppen, z. B. Hydroxylgruppen oder Ketogruppen, aufweisen können. Die Poly- oder Dicarbonsäurekomponente wird in den erfindungsgemäßen Verfahren in einem Bereich von 5 bis 45 Gew.-% bei der Umsetzung verwendet werden. Vorzugsweise enthält Komponente C keine Hydroxylgruppen zusätzlich zu den Carboxylgruppen. Es handelt sich damit vorzugsweise nicht um Polyhydroxycarbonsäuren. Besonders vorteilhaft können solche Poly- oder Dicarbonsäuren verwendet werden, die ausschließlich als funktionelle Gruppen Carboxylguppen und/oder deren Anhydride aufweisen. Ebenso können beispielsweise in einer weiteren Variante die Salze oder Ester der Komponente C verwendet werden, wie zum Beispiel das Salz aus dem Carboxylat und dem Ion eines Erdalkalimetalls. Vorzugsweise liegen bei der Umsetzung freie Säuregruppen vor. Beispiele geeigneter Polycarbonsäuren sind C₃₋₁₂-Alkanpolycarbonsäuren oder -dicarbonsäuren, beispielsweise Malonsäure, Bernsteinsäure, Glutarsäure, Adipinsäure oder höhere Dicarbonsäuren, die auch C₁₋₃-Alkyl-substitutiert sein können. Geeignete aromatische Poly- oder Dicarbonsäuren sind beispielsweise Phthalsäure, Isophthalsäure, Terephthalsäure. Ferner kommen aliphatische ungesättigte Poly- oder Dicarbonsäure, wie Fumarsäure oder Maleinsäure und Ketogruppen enthaltende Dicarbonsäuren, wie Oxalessigsäure in Betracht.

Vorzugsweise wird Komponente C bei der Umsetzung zumindest teilweise, vorzugsweise vollständig gelöst in Komponente B eingesetzt. So können auch bei der Umsetzungstemperatur feste Polycarbonsäuren in einfacher Weise in die Umsetzung, bzw. das Reaktionsgemisch eingebracht werden.

Unter mindestens einer Lewisbasekomponente, hier auch als Komponente D bezeichnet, kann im Sinne der vorliegenden Erfindung kann eine Verbindung verstanden werden, die Elektronenpaare zur Verfügung stellen kann, wie dies beispielsweise unter dem Begriff "Lewisbase" in der Chemie zu verstehen ist. Vorzugsweise befindet sich das freie Elektronenpaar in einer organischen Verbindung, kann aber auch an einem Metall oder an einer metallorganischen Verbindung gebunden sein.

Die Lewisbase wird vorzugsweise in einer Menge von 0,02 bis 2 Gew.-%, besonders bevorzugt 0,05 bis 1 Gew.-%, verwendet.

Die Gesamtmengen der Komponenten A bis D ergeben dabei 100 Gew.-%. Dies bedeutet, dass im Umsetzungsgemisch weitere, von A bis D verschiedene, Komponenten vorliegen können, aber nicht müssen. Die Mengenangaben von Komponenten A bis D sind bezüglich ihrer Summe normiert.

In dem erfindungsgemäßen Verfahren ist die Lewisbasekomponente N-Methylimidazol. Idealerweise kann die Lewisbase die Bildung eines Carboxylates aus der Carbonsäure generieren, so dass dieses schnell mit der Diisocyanatkomponente reagieren kann. Ebenfalls fungiert die Lewisbase auch als Katalysator für die Abspaltung des CO₂ bei der Reaktion der Diisocyanatkomponente mit der Dicarbonsäurekomponente. Besonders vorteilhaft kann sich ein synergistischer Effekt aus der Bildung des Carboxylates und der Abspaltung von CO₂ mittels der Lewisbase ergeben, so dass nur ein Katalysator oder Beschleuniger notwendig ist.

Das Verfahren zur Herstellung eines Polymerhartschaumes kann bei einer Starttemperatur in einem Bereich von mindestens 15 °C bis höchstens 100 °C, bevorzugter von mindestens vorzugsweise 15 °C bis höchstens 80 °C, insbesondere bei einer Starttemperatur von mindestens 25 °C bis höchstens 75 °C, und besonders bevorzugt bei einer Starttemperatur von mindestens 30 °C bis höchstens 70 °C durchgeführt werden. Dabei kann die Umsetzung der oben genannten Komponenten bei Normaldruck erfolgen. Dadurch kann beispielsweise der Energieverbrauch bei der Herstellung des Polymerhartschaums reduziert werden. Ebenso kann der nachteilhafte Einfluss einer höheren Temperatur auf die Bildung einer Kernverbrennung umgangen werden, und Gasentstehung/Schaumbildung und Viskositätsanstieg sind - wie vorstehend beschrieben - gut aufeinander abgestimmt.

Dabei werden der Reaktor und das Umsetzungsgemisch auf die entsprechende Temperatur temperiert, bei der die Umsetzung gestartet wird. Im Laufe der Umsetzung kann sich die Temperatur erhöhen. Typischerweise wird das Behältnis, in dem die Umsetzung stattfindet, nicht separat erhitzt oder gekühlt, so dass die Reaktionswärme über die Behältniswände oder die Luft an die Umgebung abgeführt wird. Da eine Beschleunigung der Reaktion mittels der in dem erfindungsgemäßen Verfahren verwendeten Lewisbasekomponente erfolgt, wobei die Lewisbase als Katalysator fungiert, können mit dem erfindungsgemäßen Verfahren Diisocyanatkomponenten und Dicarbonsäurenkomponenten zu einer Amidkomponente vollständig und schnell weiterreagieren. Dabei muss vorteilhafterweise die Umsetzung nicht unter einer erhöhten Temperatur, wie sie beispielsweise in der EP 0 527 613 A2 beschrieben wird, durchgeführt werden.

In einer weiteren Ausgestaltung des erfindungsgemäßen Verfahrens kann die Umsetzung mit kurzkettigen Dicarbonsäuren, und Di- bzw. Polyiscyanaten erfolgen. Dies kann zum Beispiel die Entstehung von Blockcopolymeren ermöglichen.

Im Rahmen einer bevorzugten Ausführungsform des erfindungsgemäßen Verfahrens startet die Umsetzung zu dem thermoplastischen Polymerschaum nach mindestens 3 bis 90 Sekunden, insbesondere nach 5 bis 70 Sekunden und ganz besonders bevorzugt nach 5 bis 40 Sekunden. Dabei bedeutet ein Starten der Reaktion, dass die Komponenten A, B, C und D, nachdem sie miteinander in Kontakt gebracht wurden, sich in die entsprechenden, bzw. in das entsprechende Produkt(e) umsetzen. Vorteilhafterweise braucht dabei nicht mit extern erwärmten Komponenten oder Reaktoren gearbeitet zu werden.

Im Rahmen einer weiteren Ausführungsform des erfindungsgemäßen Verfahrens weist der Polymerhartschaum eine Schaumdichte vorzugsweise von 10 g/l bis 200 g/l, besonders bevorzugt von 12 g/l bis 80 g/l und insbesondere von 15 g/l bis 50 g/l auf. Dadurch kann vorteilhafterweise eine Schaumdichte erzielt werden, die mit Polyurethanen nur schwer erzielt werden kann. Hierbei können aber idealerweise Diisocyanatkomponenten und somit ebenfalls ähnliche Bedingungen bei der Herstellung verwendet werden.

In einer weiteren Ausführungsform des erfindungsgemäßen Verfahrens erfolgt die Umsetzung mit einem Schaumstabilisator, wobei der Stabilisator vorzugsweise ein Siloxancopolymer umfasst. Dabei ist das Polysiloxancopolymer vorzugsweise ausgewählt aus der Gruppe umfassend Polyether-Polysiloxancopolymere, wie Polyether-Polydimethylsiloxan-Copolymere.

Ein weiterer Gegenstand ist ein Polymerhartschaum, der sich von Polyisocyanaten, Polyolen oder einem Isocyanatgruppen-haltigen Prepolymer daraus sowie Polycarbonsäuren als Monomeren ableitet, in der Polymerhauptkette Urethan- und Amidgruppen aufweist und eine Schaumdichte von 10 g/l bis 200 g/l hat, sowie dessen Verwendung zur Wärmedämmung oder als Kernschaum.

Ein weiterer Gegenstand der Erfindung ist eine Polyolmischung, umfassend die Komponenten B, C und D, wie sie vorstehend definiert sind, wobei Komponente C gelöst in Komponente B vorliegen kann und wobei die vorstehenden Mengenangaben der Komponenten B, C und D, deren Summe 35 bis 65 Gew.-%, vorzugsweise 38 bis 60 Gew.-%, insbesondere 45 bis 58 Gew.-% beträgt, nur die Mengenverhältnisse der Komponenten B, C und D untereinander angeben.

Unter einem Polyadditionsprodukt wird im Sinne der vorliegenden Erfindung ein chemisches Reaktionsprodukt verstanden, bei dem die Edukte miteinander reagieren, jedoch keine niedermolekularen Nebenprodukte, wie beispielsweise Wasser oder CO₂ entstehen, z. B. bei der Urethanbildung. Unter einem Polykondensationsprodukt kann im Sinne der vorliegenden Erfindung ein Produkt verstanden werden, das bei der Reaktion von zwei Edukten zumindest ein niedermolekulares Nebenprodukt liefert, z. B. Kohlendioxid bei der Amidbildung. Dabei kann demnach eine Polyglycolkomponente mit einer Diisocyanatkomponente ein Polyadditionsprodukt bilden und eine Dicarbonsäurekomponente kann mit der Diisocyanatkomponente unter Bildung eines Carbaminsäureanhydrids und Weiterreaktion zu einer Amidverbindung, unter CO₂-Bildung, als Polykondensationsreaktion umgesetzt werden.

Ein weiterer Gegenstand der vorliegenden Erfindung ist die Verwendung des erfindungsgemäßen Polymerhartschaums zur Wärmedämmung oder als Konstruktionswerkstoff.

Zur Wärmedämmung erfolgt dabei die Verwendung bevorzugt zur Herstellung von Kühl- oder Gefriergeräten, Geräten zur Warmwasserbereitung oder -speicherung oder von Teilen davon, oder zur Wärmedämmung von Gebäuden, Fahrzeugen oder Geräten.

Dabei wird insbesondere in den vorstehenden Anwendungen die Wärmedämmschicht der Vorrichtungen oder Geräte, Gebäude oder Fahrzeuge durch den erfindungsgemäßen Polymerhartschaum gebildet. Auch die gesamten Gehäuse oder Außenhüllen der Geräte, Gebäude oder Fahrzeuge können durch den erfindungsgemäßen Polymerhartschaum gebildet werden.

Als Konstruktionswerkstoff wird der erfindungsgemäße Polymerhartschaum vorzugsweise als Kernschaum zur Herstellung von Sandwichverbundwerkstoffen eingesetzt. Derartige Sandwichverbundwerkstoffe weisen typischerweise einen Kern aus einem Polymerhartschaum und eine Beplankung oder Hülle aus einem Glasfaser-verstärktem Kunststoff auf. Der Kunststoff der Umhüllung oder Beplankung kann dabei frei gewählt werden. Häufig handelt es sich um Epoxidoder Polyesterharze.

Derartige Sandwichverbundwerkstoffe werden bevorzugt in der Automobil-, Schiffbau-, Gebäudebau- oder Windanlagenindustrie eingesetzt.

Erfindungsgemäß werden unter Fahrzeugen Luft-, Land- oder Wasserfahrzeuge verstanden, insbesondere Flugzeuge, Automobile oder Schiffe.

Weitere Anwendungen der erfindungsgemäßen Polymerhartschäume sind dem Fachmann bekannt.

Die nachfolgenden Beispiele sollen die Erfindung näher erläutern:

### Beispiele:

In den folgenden Beispielen werden die Herstellung und die Eigenschaften von Polymerhartschäumen gezeigt. Die erfindungsgemäßen Materialien wurden im Labor mit einem Standmischer hergestellt. Sofern nicht anders angegeben, erfolgte die Umsetzung bei Umgebungstemperatur (22 °C) als Starttemperatur, d. h. die Komponenten wurden bei Umgebungstemperatur in einem nicht temperierten Reaktor oder Behältnis umgesetzt, und die Reaktionswärme wurde an die Umgebung abgeführt.

Gemäß Tabelle 1 wurden folgende Polymerhartschäume im Labor hergestellt. Die bei Raumtemperatur festen Dicarbonsäurekomponenten wurden vorab in der Polyolkomponente aufgeschmolzen und gelöst. Anschließend erfolgte der Umsatz der Diol-Dicarbonsäure-Mischung mit einem Polyisocyanat. Es wurden Würfel mit einem Volumen von 20 I geschäumt, welche anschließend mechanisch geprüft wurden. Die Zusammensetzung der Ausgangssubstanzen sowie die Ergebnisse der Prüfung sind in Tabelle 1 angegeben.

Neben den erfindungsgemäßen Polymerhartschäumen gemäß Beispielen 1, 2 und 3 wurden zwei bislang übliche Polymerhartschäume aus bekannten Zusammensetzungen als Vergleichsbeispiele 1 und 2 hergestellt. Hierbei war es erforderlich, Mischungen mehrerer Polyole und Mischungen mehrerer Katalysatoren einzusetzen, um zu verwendbaren Polymerhartschäumen zu gelangen.

Durch das erfindungsgemäße Verfahren ist eine derartige Vielzahl von Polyol- und Katalysatorkomponenten nicht mehr erforderlich. Polymerhartschäume mit hervorragenden Eigenschaften wurden bereits beim Einsatz einer einzigen Polyolkomponente und eines einzigen Katalysators erhalten, wie aus den nachstehenden Tabellen hervorgeht.

**Tabelle 1**

| | Bsp. 1 | Bsp. 2 | Bsp. 3 | Vgl 1 | Vgl 2 |
|---|---|---|---|---|---|
| Säure 1 | 9,8 | | | | |
| Säure 2 | | 13,5 | | | |
| Säure 3 | | | 34,9 | | |
| Säure 4 | | | | 0,6 | |
| Polyol 1 | 28,7 | 31,5 | 17,1 | | 7,5 |
| Polyol 2 | | | | 18,3 | |
| Polyol 3 | | | | 5,7 | |
| Polyol 4 | | | | 3 | |
| Polyol 5 | | | | | 22,9 |
| Polyol 6 | | | | | 2,2 |
| Polyol 7 | | | | | 6,7 |
| Iso 1 | 61 | 54 | 46,8 | | 58,3 |
| Iso 2 | | | | 57,6 | |
| Stabi 1 | 0,4 | 0,8 | 0,8 | | |
| Stabi 2 | | | | 0,8 | |
| Stabi 3 | | | | | 0,2 |
| Stabi 4 | | | | | 0,5 |
| Kat 1 | 0,1 | 0,2 | 0,4 | | 0,1 |
| Kat 2 | | | | 0,9 | |
| Kat 3 | | | | 0,5 | |
| Kat 4 | | | | | 0,2 |
| Treibmittel 1 | | | | 3,0 | |
| Treibmittel 2 | | | | | 1,5 |
| Additiv | | | | 9,5 | |

Dabei bedeutet:
- Säure 1:: Pentandisäure M=132g/mol
- Säure 2:: Methylenbernsteinsäure M=130g/mol
- Säure 3:: Dicarbonsäuregemisch mit einem mittleren Molekulargewicht von 800 g/mol
- Säure 4:: 85 Teile Methansäure in 15 Teile Wasser
- Polyol 1:: Polypropylenglykol mit mittlerem Molekulargewicht (MW) von 420 g/mol
- Polyol 2:: Polyesterdiol (Phthalsäure-Ölsäurepolyesterdiol) mit einer mittleren Molmasse von 600 g/l
- Polyol 3:: Polyesterol (Phthalsäure-Ölsäurepolyesterdiol) mit einer mittleren Molmasse von 510 g/l und einer mittleren Funktionalität von 2,2
- Polyol 4:: Polyethylenglykol mit mittlerem Molekulargewicht (MW) von 600 g/mol
- Polyol 5:: Polypropylenglykol mit mittlerem Molekulargewicht (MW) von 500 g/mol
- Polyol 6:: Polypropylenglykol mit mittlerem Molekulargewicht (MW) von 1040 g/mol
- Polyol 7:: Polypropylenglykol mit mittlerem Molekulargewicht (MW) von 1070 g/mol
- Additiv:: Tri 2-Chlorisopropylphosphat
- Treibmittel 1:: n-Pentan
- Treibmittel 2:: Wasser
- Iso 1:: Polymeres Methylendiphenylendiisocyanat mit einer mittleren Molmasse von 337 g/mol und einer Funktionalität von 2,7
- Iso 2:: Polymeres Methylendiphenylendiisocyanat mit einer mittleren Molmasse von 362 g/mol und einer Funktionalität von 2,8
- Stabi 1:: Polyether-Polysiloxan-Copolymer
- Stabi 2:: Polyether-Polydimethylsiloxan
- Stabi 3:: Silikon-Glykol-Copolymer
- Stabi 4:: Polyether-Polydimethylsiloxan-Copolymer
- Kat 1:: 1-Methylimidazol
- Kat 2:: 30 Teile eines Bis-(2-dimethylaminoethyl)ethers in Dipropylenglykol
- Kat 3:: 40 Teile Kaliumformiat, 6 Teile Wasser, 54 Teile Monoethylenglykol
- Kat 4:: N,N-Dimethylcyclohexylamin

### Beispiel 1 (erfindungsgemäß)

53 Teile Pentandisäure wurden zusammen mit 159 Teilen Polypropylenglykol mit einem MW von 420 g/mol im Heizschrank über 100°C erhitzt, bis die Pentandisäure vollständig aufgeschmolzen war. Anschließend wurde diese Säure-Polyol-Mischung homogenisiert und auf Raumtemperatur abgekühlt, bevor sie mit 2,1 Teilen Polyether-Polysiloxan-Copolymer und 0,7 Teilen 1-Methylimidazol vermischt wurde. Nach Zugabe von 337 Teilen Polymeren Methylendiphenylendiisocyanat erfolgt eine kräftige Durchmischung mit dem Laborrührer für 10s. Direkt im Anschluss wurde das System in eine Würfelform gegossen, in welcher es aufschäumte. Aus dem so hergestellten Polyamid-Polyurethanschaum wurden Prüfkörper entnommen und an diesen wurden die mechanischen/thermischen Tests durchgeführt.

### Beispiel 2 (erfindungsgemäß)

75 Teile Methylenbernsteinsäure wurden zusammen mit 175 Teilen Polypropylenglykol mit einem MW von 420 g/mol im Heizschrank auf 170°C erhitzt bis die Methylenbernsteinsäure vollständig aufgeschmolzen war. Anschließend wurde diese Säure-Polyol-Mischung homogenisiert und auf 35°C abgekühlt, bevor sie mit 4 Teilen Polyether-Polysiloxan-Copolymer und 1,2 Teilen 1-Methylimidazol vermischt wurde. Mit dem Laborrührer erfolgte eine kräftige Durchmischung mit 300 Teilen Polymeren Methylendiphenylendiisocyanat. Die Prüfkörper wurden gemäß Beispiel 1 erstellt und geprüft.

### Beispiel 3 (erfindungsgemäß)

234,5 Teile Dicarbonsäuregemisch mit einer mittleren Molmasse von 850g/l wurden zusammen mit 115 Teilen Polypropylenglykol mit einem MW von 420 g/mol im Heizschrank auf 40°C erwärmt. Diese Säure-Polyol-Mischung wurde mit 5,4 Teilen Polyether-Polysiloxan-Copolymer und 2,7 Teilen 1-Methylimidazol vermischt. Anschließend wurden 315 Teilen Polymeren Methylendiphenylendiisocyanat eingewogen und es erfolgte eine Durchmischung mit dem Laborrührer. Die Prüfkörper wurden gemäß Beispiel 1 erstellt und geprüft.

### Vergleich Beispiel 1

Die Komponenten gemäß Tabelle 1 in Spalte Vgl 1 mit Ausnahme der Iso 2 wurden zusammen zu einer Gesamtansatzgröße von 350 Teilen anteilsgemäß eingewogen und anschließend homogenisiert. Diese Mischung wurde mit 490 Teilen Iso 2 kräftig mit einem Laborrührer verrührt und anschließend in die Würfelform gegossen. In der Form steigt der Hartschaum auf und wurde in ihr bis zur Aushärtung gelassen.

### Vergleich Beispiel 2

Die Komponenten gemäß Tabelle 1 in Spalte Vgl 2 mit Ausnahme der Iso 1 wurden zusammen zu einer Gesamtansatzgröße von 400 Teilen anteilsgemäß eingewogen und anschließend homogenisiert. Diese Mischung wurde mit 680 Teilen Iso 1 kräftig mit einem Laborrührer verrührt und anschließend in die Würfelform gegossen. In der Form steigt der Hartschaum auf und wurde in ihr bis zur Aushärtung gelassen.

Eigenschaften der erhaltenen Produkte

**Tabelle 2**

| | Bsp. 1 | Bsp. 2 | Vgl1 |
|---|---|---|---|
| Dichte | 44 | 34 | 48 |
| Druckfest. | 0,25 | 0,25 | 0,12 |
| Stauchung | 5,1 | 8,7 | 10 |

| | | | |
|---|---|---|---|
| Dichte Raumgewicht Kern [kg/m³] Druckfest. Druckfestigkeit [N/mm²] nach DIN 53421 / DIN EN ISO 604 Stauchung Stauchung [%] nach DIN 53421 / DIN EN ISO 604 | | | |

Aus der Tabelle 2 ist erkennbar, dass die erfindungsgemäßen Beispiele mit Hartschäumen im gleichen Dichtebereich eine höhere Druckfestigkeit aufweisen. Die Stauchungswerte fallen ebenfalls besser aus bei den erfindungsgemäßen Schäumen.

**Tabelle 3**

| | Bsp. 1 | Bsp. 2 | Vgl 2 |
|---|---|---|---|
| Dichte | 44 | 34 | 39 |
| Wärmeleitf. | 23,7 | 23,2 | 32 |
| Geschlossenz. | 91 | 86 | 92 |

| | | | |
|---|---|---|---|
| Dichte Raumgewicht Kern [kg/m³] Wärmeleitf.Wärmeleitfähigkeit [mW/m*K] Hesto A50 (Mitteltemp. 23°C) Geschlossenz. Geschlossenzelligkeit [%] nach DIN ISO 4590 | | | |

Tabelle 3 zeigt, dass die erfindungsgemäßen Hartschäume eine geringere Wärmeleitfähigkeit aufweisen als Hartschäume im gleichen Dichtebereich und bei vergleichbarer Geschlossenzelligkeit.

**Tabelle 4**

| | Bsp. 1 | Bsp. 2 | Bsp. 3 | Vgl1 |
|---|---|---|---|---|
| Dichte | 44 | 34 | 46 | 48 |
| Geschlossenz. | 91 | 86 | 80 | 92 |
| TGA | 265 | 285 | 270 | 214 |

| | | | | |
|---|---|---|---|---|
| Dichte Raumgewicht Kern [kg/m³] Geschlossenz. Geschlossenzelligkeit [%] nach DIN ISO 4590 TGA Thermogravimetrischen Analyse [°C] nach DIN EN ISO 11358 Auswertung auf Absolutwertbasis bei 95 % der Ausgangsprobenmasse | | | | |

In der Thermogravimetrischen Analyse erweisen sich die erfindungsgemäßen Schäume als temperaturstabiler als Hartschäume mit vergleichbarer Dichte und Geschlossenzelligkeit.

## Patentansprüche

1. Geänderte Patentansprüche auf die Mitteilung gemäß Artikel 94 (3) EPÜ vom 23. September 2015: 1. Verfahren zur Herstellung eines Polymerhartschaums, umfassend die Umsetzung der Komponenten A bis C in Gegenwart von Komponente D oder eines Isocyanatgruppen-haltigen Prepolymers der Komponenten A und B mit Komponente C in Gegenwart von Komponente D, deren Gesamtmenge 100 Gew.% ergibt,
(A) 35 bis 65 Gew.-% mindestens einer Polyisocyanatkomponente A,
(B) 5 bis 50 Gew.-% von mindestens einer Polyolkomponente B,
(C) 5 bis 45 Gew.-% von mindestens einer Polycarbonsäurekomponente C und
(D) 0,05 bis 1 Gew.-% mindestens einer Lewisbasekomponente D, wobei die Lewisbasekomponente N-Methylimidazol ist und
wobei die Umsetzung unter Freisetzung von Kohlendioxid erfolgt.

2. Verfahren nach Anspruch 1,
**dadurch gekennzeichnet, dass** die Komponente B eine OH-Zahl von 10 mg KOH/g bis 1000 mg KOH/g aufweist.

3. Verfahren nach einem der Ansprüche 1 bis 2, **dadurch gekennzeichnet, dass** der Poly-merhartschaum eine Schaumdichte von 10 g/l bis 200 g/l aufweist.

4. Verfahren nach einem der Ansprüche 1 bis 3, **dadurch gekennzeichnet, dass** die Umsetzung in Gegenwart eines Schaumstabilisators erfolgt, der vorzugsweise ein Siloxancopo-lymer umfasst.

5. Verfahren nach einem der Ansprüche 1 bis 4, **dadurch gekennzeichnet, dass** die Polyolkomponente B ein Polyetherpolyol oder Polyesterpolyol ist.

6. Verfahren nach einem der Ansprüche 1 bis 5, **dadurch gekennzeichnet, dass** bei der Umsetzung Komponente C gelöst in Komponente B eingesetzt wird.

7. Polymerhartschaum, erhältlich gemäß dem Verfahren nach einem der Ansprüche 1 bis 6.

8. Polyolmischung, umfassend die Komponenten B, C und D, wie sie in einem der Ansprüche 1 bis 2 oder 5 definiert sind, wobei Komponente C gelöst in Komponente B vorliegen kann und wobei die Mengenangaben der Komponenten B, C und D, deren Summe 35 bis 65 Gew.-% beträgt, nur die Mengenverhältnisse der Komponenten B, C und D untereinander angeben.

9. Verwendung des Polymerhartschaums nach Anspruch 7 zur Wärmedämmung oder als Konstruktionswerkstoff.

10. Verwendung nach Anspruch 9 zur Herstellung von Kühl- oder Gefriergeräten, Geräten zur Warmwasserbereitung oder -speicherung oder Teilen davon, oder zur Wärmedämmung von Gebäuden, Fahrzeugen oder Geräten.

11. Verwendung nach Anspruch 9 als Kernschaum von Sandwichverbundwerkstoffen.

## Claims

1. A process for producing a rigid polymer foam comprising reacting components A to C in the presence of component D or an isocyanate-functional prepolymer of components A and B with component C in the presence of component D, the total amount of which is 100 wt%,
(A) 35 to 65 wt% of at least one polyisocyanate component A,
(B) 5 to 50 wt% of at least one polyol component B,
(C) 5 to 45 wt% of at least one polycarboxylic acid of component C, and
(D) 0.05 to 1 wt% of at least one Lewis base component D, wherein said Lewis base component is N-methylimidazole and
wherein the reaction takes place with release of carbon dioxide.

2. The process according to claim 1 wherein said component B has an OH number in the range from 10 mg KOH/g to 1000 mg KOH/g.

3. The process according to any of claims 1 to 2 wherein the rigid polymer foam has a density in the range from 10 g/l to 200 g/l.

4. The process according to any of claims 1 to 3 wherein the reaction takes place in the presence of a foam stabilizer which preferably comprises a siloxane copolymer.

5. The process according to any of claims 1 to 4 wherein said polyol component B is a polyether polyol or a polyester polyol.

6. The process according to any of claims 1 to 5 wherein component C is used in the reaction as a solute in component B.

7. A rigid polymer foam obtainable via the process according to any of claims 1 to 6.

8. A polyol mixture comprising components B, C and D as defined in any of claims 1 to 2 or 5, wherein component C may be a solute in component B and wherein the quantitative recitations for components B, C and D, the sum total of which is in the range from 35 to 65 wt%, only indicate the quantitative ratios between components B, C and D.

9. The use of the rigid polymer foam according to claim 7 for thermal insulation or as engineering material.

10. The use according to claim 9 for production of refrigerating or freezing appliances, appliances for hot water preparation or storage or parts thereof, or for thermal insulation of buildings, vehicles or appliances.

11. The use according to claim 9 as core foam of sandwich composites.

## Revendications

1. Procédé de fabrication d'une mousse dure polymère, comprenant la mise en réaction des composants A à C en présence du composant D ou d'un prépolymère contenant des groupes isocyanate des composants A et B avec le composant C en présence du composant D, dont la quantité totale est de 100 % en poids,
(A) 35 à 65 % en poids d'au moins un composant polyisocyanate A,
(B) 5 à 50 % en poids d'au moins un composant polyol B,
(C) 5 à 45 % en poids d'au moins un composant acide polycarboxylique C, et
(D) 0,05 à 1 % en poids d'au moins un composant base de Lewis D, le composant base de Lewis étant le N-méthylimidazole,
la réaction ayant lieu avec libération de dioxyde de carbone.

2. Procédé selon la revendication 1, **caractérisé en ce que** le composant B présente un indice OH de 10 mg KOH/g à 1 000 mg KOH/g.

3. Procédé selon l'une quelconque des revendications 1 à 2, **caractérisé en ce que** la mousse dure polymère présente une densité de mousse de 10 g/l à 200 g/l.

4. Procédé selon l'une quelconque des revendications 1 à 3, **caractérisé en ce que** la réaction a lieu en présence d'un stabilisateur de mousse qui comprend de préférence un copolymère de siloxane.

5. Procédé selon l'une quelconque des revendications 1 à 4, **caractérisé en ce que** le composant polyol B est un polyéther-polyol ou un polyester-polyol.

6. Procédé selon l'une quelconque des revendications 1 à 5, **caractérisé en ce que** le composant C est utilisé dissous dans le composant B lors de la réaction.

7. Mousse dure polymère, pouvant être obtenue par le procédé selon l'une quelconque des revendications 1 à 6.

8. Mélange de polyols, comprenant les composants B, C et D, tels que définis dans l'une quelconque des revendications 1 à 2 ou 5, le composant C pouvant se présenter dissous dans le composant B, et les indications de quantité des composants B, C et D, dont la somme est de 35 à 65 % en poids, n'indiquant que les proportions des composants B, C et D les uns entre les autres.

9. Utilisation de la mousse dure polymère selon la revendication 7 pour l'isolation thermique ou en tant que matériau de construction.

10. Utilisation selon la revendication 9, pour la fabrication d'appareils de réfrigération ou de congélation, d'appareils pour la préparation ou le stockage d'eau chaude ou de parties de ceux-ci, ou pour l'isolation thermique de bâtiments, d'automobiles ou d'appareils.

11. Utilisation selon la revendication 9, en tant que mousse centrale de matériaux composites en sandwich.
